# EUROPEAN PATENT SPECIFICATION

(11) **EP 2 909 372 B1**
(45) Date of publication and mention of the grant of the patent: **02.12.2020**
(21) Application number: 12886885.8
(22) Date of filing: 16.10.2012
(51) Int. Cl.: D07B 1/22, D07B 1/12, B66B 7/06

(54) **METHOD OF ELEVATOR CORD CLEANING AND HEATING**
VERFAHREN ZUM REINIGEN UND ERWÄRMEN EINER AUFZUGSCHNUR
PROCÉDÉ DE NETTOYAGE ET DE CHAUFFAGE DE CÂBLES D'ASCENSEUR

(43) Date of publication of application: 26.08.2015
(73) Proprietor: Otis Elevator Company, Farmington CT 06032 (US)
(72) Inventor: GUILANI, Brad, Woodstock Valley, Connecticut 06282 (US)
(74) Representative: Dehns
(86) International application number: PCT/US2012/060358
(87) International publication number: WO 2014/062159

(56) References cited:
- EP-B1- 1 049 109
- EP-B1- 1 842 960
- WO-A1-2012/128753
- CN-U- 201 519 680
- CN-U- 202 081 329
- JP-A- H0 759 226
- JP-A- H09 302 592
- JP-A- 2007 319 770
- KR-A- 20010 054 295
- US-A- 5 109 565
- US-A- 5 179 830
- US-A1- 2005 044 653
- US-A1- 2007 102 183
- US-A1- 2009 101 178

## Description

### BACKGROUND OF THE INVENTION

The subject matter disclosed herein relates to elevator systems. More specifically, the subject disclosure relates to tension members for elevator suspension and/or driving.

Elevator systems utilize ropes or belts operably connected to an elevator car, and routed over one or more sheaves, also known as pulleys, to propel the elevator car along a hoistway. Belts in particular typically include a plurality of wires at least partially within a jacket material. The plurality of wires is often arranged into one or more strands and the strands are then arranged into one or more cords. In an exemplary belt construction, a plurality of cords is typically arranged equally spaced within a jacket in a longitudinal direction. The cords are typically formed of a plurality of outer strands helically wound around a center strand and each strand is made up of a plurality of wires helically wound around a center wire. The belt is constructed by encapsulating one or more of the cords in the polymeric jacket, typically of a material such as polyurethane. One of two methods are most used, either direct extrusion of the jacket over the one or more cords, or application of the jacket to the one or more cords via a mold wheel process. In either process, volatile contaminants on the one or more cords can result in poor adhesion of the jacket to the steel cords and/or result in voids and bubbles in the jacket.

US 2007/0102183 describes a flexible traction organ suitable for passenger and/or goods lifts that can be wound and unwound. The organ comprises at least one stranded cable consisting of a tensile resistant material. JP H09 302592 describes a strander designed to improve the adhesivity of steel cord to rubber, polyurethanes etc. This is achieved by removing the cleaning liquid adhered to the laid steel cord to raise cleaning performance and reliability.

### BRIEF DESCRIPTION OF THE INVENTION

According to one aspect of the invention, a method of preparing one or more cords for a forming process of a belt for suspending and/or driving an elevator car includes arranging a plurality of wires into a one or more cords. The one or more cords are directed in a cord travel direction toward a jacket former. A high pressure airflow is directed at the one or more cords of to remove volatile contaminants from the one or more cords in a direction away from the jacket former. The method includes utilizing a vacuum system located between the airflow and the jacket former to remove contaminants dislodged by the high pressure airflow.

The high pressure airflow is at a pressure in the range of about 3-10 bar.

Alternatively in this or other aspects of the invention, the high pressure airflow is directed at the one or more cords via one or more nozzles.

Alternatively in this or other aspects of the invention, the one or more nozzles are one or more ribbon nozzles.

The method includes utilizing a vacuum system located downstream of the high pressure airflow to remove contaminants dislodged by the high pressure airflow.

Alternatively in this or other aspects of the invention, the method includes heating the high pressure airflow and directing the heated high pressure airflow across the one or more cords to improve adhesion of the jacket material to the one or more cords.

Alternatively in this or other aspects of the invention, the method includes applying the jacket material to the plurality of cords via extrusion.

Alternatively in this or other aspects of the invention, the jacket is formed from an elastomeric material.

According to yet another aspect of the invention, a device comprises a jacket former and a cleaning apparatus for preparing one or more cords for forming of a belt for suspending and/or driving an elevator car, said cleaning apparatus includes a plurality of nozzles to direct a high pressure airflow at one or more cords to remove volatile contaminants from the one or more of cords. The cleaning apparatus further comprises a vacuum system, wherein the vacuum system is disposed between the plurality of nozzles and the jacket former to remove contaminants dislodged by the high pressure airflow. The high pressure airflow is at a pressure in the range of 3-10 bar.

### BRIEF DESCRIPTION OF THE DRAWINGS

FIG. 1A is a schematic of an exemplary elevator system having a 1:1 roping arrangement;
FIG. 1B is a schematic of another exemplary elevator system having a 2:1 roping arrangement;
FIG. 1C is a schematic of another exemplary elevator system having a cantilevered arrangement;
FIG. 2 is a cross-sectional view of an exemplary elevator belt;
FIG. 3 is a cross-sectional view of a cord for an elevator belt;
FIG. 4 is a schematic of a method of forming an embodiment of an elevator belt;
FIG. 5 is a schematic of another method of forming an embodiment of an elevator belt; and
FIG. 6 is a schematic of yet another method of forming an embodiment of an elevator belt.

The detailed description explains the invention, together with advantages and features, by way of examples with reference to the drawings.

### DETAILED DESCRIPTION OF THE INVENTION

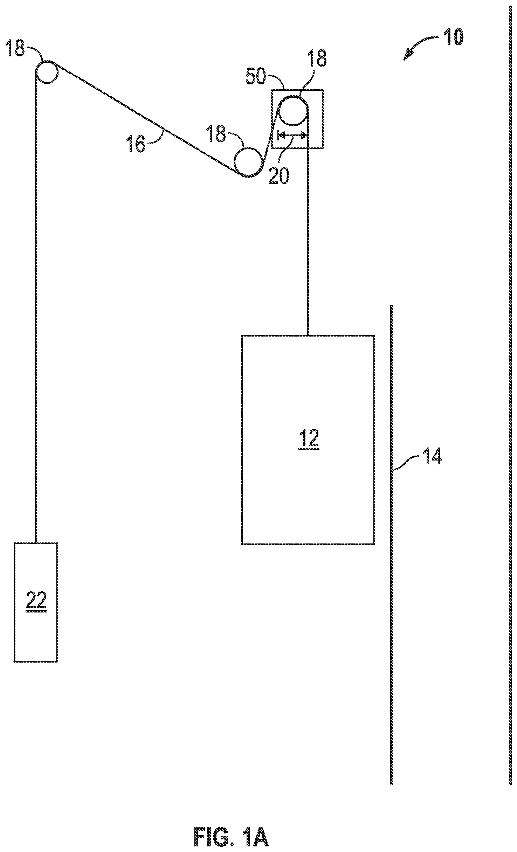

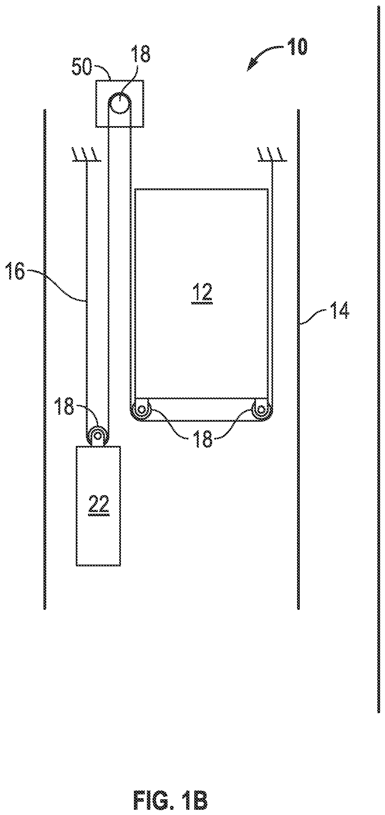

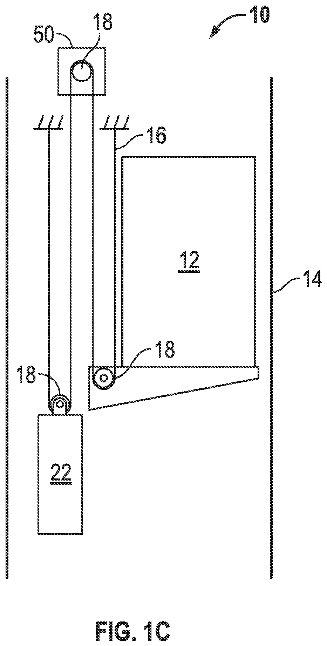

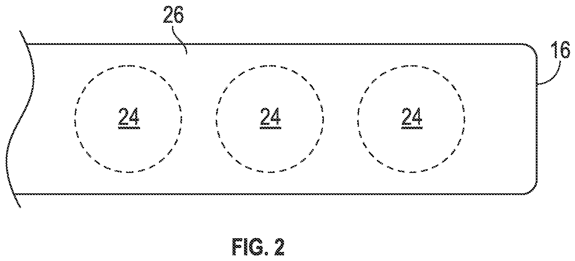

Shown in FIGS. 1A, 1B and 1C are schematics of exemplary traction elevator systems 10. Features of the elevator system 10 that are not required for an understanding of the present invention (such as the guide rails, safeties, etc.) are not discussed herein. The elevator system 10 includes an elevator car 12 operatively suspended in a hoistway 14 with one or more belts 16. The one or more belts 16 interact with one or more sheaves 18 to be routed around various components of the elevator system 10. The one or more belts 16 could also be connected to a counterweight 22, which is used to help balance the elevator system 10 and reduce the difference in belt tension on both sides of the traction sheave during operation. Although the exemplary belt 16 shown FIG. 2 has a generally planar exterior surface, other arrangements are possible. As one example, belts with a grooved arrangement could be used.

The sheaves 18 each have a diameter 20, which may be the same or different than the diameters of the other sheaves 18 in the elevator system 10. At least one of the sheaves 18 could be a traction sheave and driven by a machine 50. Movement of the traction sheave by the machine 50 drives (through traction) the one or more belts 16 that are routed around the drive sheave.

At least one of the sheaves 18 could be a diverter, deflector or idler sheave. Diverter, deflector or idler sheaves are not driven by a machine 50, but help guide the one or more belts 16 around the various components of the elevator system 10. The shape of the sheave 18 depends on the shape of the belt 16 that it engages. For example, one or more of the sheaves 18 may have a crown (*i.e*. a convex shape) along its axis of rotation to assist in keeping the one or more belts 16 centered, or in a desired position, along the sheaves 18. While such a shape may be used with the belt 16 shown in FIG. 2, other shapes are possible. As one example, the sheave could have a grooved surface to receive a grooved belt.

In some embodiments, the elevator system 10 could use two or more belts 16 for suspending and/or driving the elevator car 12. In addition, the elevator system 10 could have various configurations such that either both sides of the one or more belts 16 engage the one or more sheaves 18 (such as shown in the exemplary elevator systems in FIGS. 1A, 1B or 1C) or only one side of the one or more belts 16 engages the one or more sheaves 18.

FIG 1A provides a 1:1 roping arrangement in which the one or more belts 16 terminate at the car 12 and counterweight 22. FIGS. 1B and 1C provide different roping arrangements. Specifically, FIGS. 1B and 1C show that the car 12 and/or the counterweight 22 can have one or more sheaves 18 thereon engaging the one or more belts 16 and the one or more belts 16 can terminate elsewhere, typically at a structure within the hoistway 14 (such as for a machine-room-less elevator system) or within the machine room (for elevator systems utilizing a machine room. The number of sheaves 18 used in the arrangement determines the specific roping ratio (e.g. the 2:1 roping ratio shown in FIGS. 1B and 1C or a different ratio). FIG 1C also provides a so-called rucksack or cantilevered type elevator. The present invention could be used on elevator systems other than the exemplary types shown in FIGS. 1A, 1B and 1C.

FIG. 2 provides a schematic of an exemplary belt construction. Each belt 16 is constructed of one or more cords 24 and a jacket 26. As seen in FIG. 2, the belt 16 has an aspect ratio greater than one (i.e. belt width is greater than belt thickness).

The belts 16 are constructed to have sufficient flexibility when passing over the one or more sheaves 18 to provide low bending stresses, meet belt life requirements and/or have smooth operation, while also being sufficiently strong to suspend and/or drive the elevator car 12.

The jacket 26 could be any suitable material, including a single material, multiple materials, two or more layers using the same or dissimilar materials, and/or a film. In one arrangement, the jacket 26 could be a polymer, such as an elastomer, applied to the cords 24 using, for example, an extrusion or a mold wheel process. In another arrangement, the jacket 26 could be a woven fabric that engages and/or integrates the cords 24. As an additional arrangement, the jacket 26 could be one or more of the previously mentioned alternatives in combination.

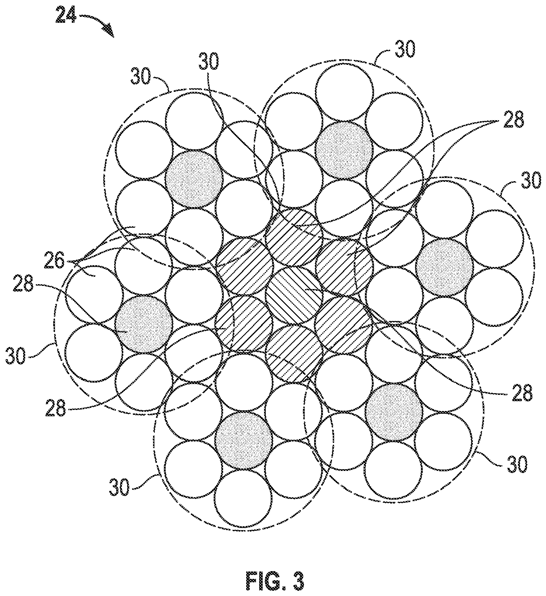

Referring now to FIG. 3, each cord 24 comprises a plurality of wires 28 in a geometrically stable arrangement. Optionally, some or all of these wires 28 could be formed into strands 30, which are then formed into the cord 24. The phrase geometrically stable arrangement means that the wires 28 (and if used, strands 30) generally remain at their cross sectional positions in the cord 24 and axial movement of the wires 28 (and if used, strands 30) relative to each other is reversible in that they return to their positions.

The jacket 26 can substantially retain the cords 24 therein. The phrase substantially retain means that the jacket 26 has sufficient engagement with the cords 24 such that the cords 24 do not pull out of, detach from, and/or cut through the jacket 26 during the application on the belt 16 of a load that can be encountered during use in an elevator system 10 with, potentially, an additional factor of safety. In other words, the cords 24 remain at their original positions relative to the jacket 26 during use in an elevator system 10. The jacket 26 could completely envelop the cords 24 (such as shown in FIG. 2), substantially envelop the cords 24, or at least partially envelop the cords 24.

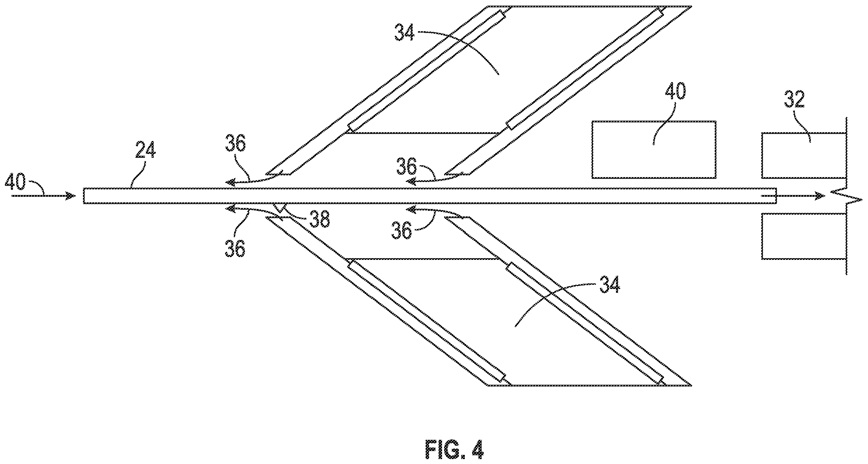

Referring to FIG. 4, to encapsulate the plurality of cords 24 in the jacket 26 the plurality of cords 24 are guided into a jacket former 32, for example, an extruder, mold wheel or other jacket former. The jacket former 32 encapsulates the cords 24 in the jacket 26. In the case of an extruder, for example, molten material is applied to the cords 24, which hardens, resulting in the coated steel belt 16.

Prior to entering the jacket former 32, the cords 24 are guided past a plurality of nozzles 34. The nozzles 34 direct a high pressure airflow 36 against the cords. 24. The pressure is in the range of about 3-10 bar at the cords 24.

The airflow 36 is urged over cords 24 at an injection angle 38 less than 90 degrees relative to a travel direction 40 of the cords 24 into the jacket former 32. Injecting the airflow at such an injection angle 38 ensures that volatile contaminants expelled from the cords 24 by the airflow 36 are blown upstream, away from the jacket former 32, as opposed to toward the jacket former 32. After airflow 36 is injected over the cords 24 to dislodge the contaminants, the cords 24 pass through or past a vacuum system 40 to remove any remaining contaminants, preventing them from being redeposited on the cords 24.

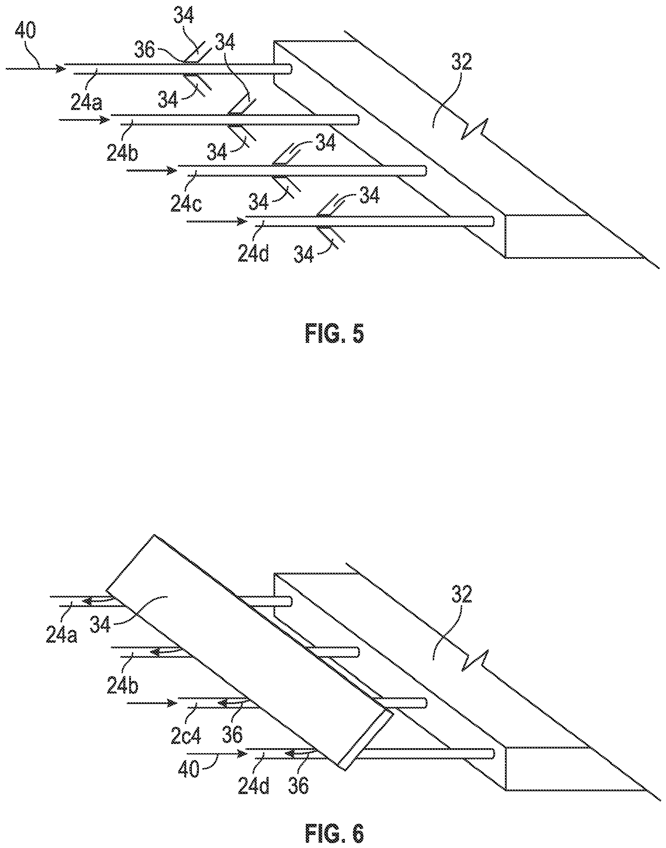

In some embodiments, as shown in FIG. 5, the nozzles 34 are each located at specific cords of the plurality of cords 24a-24d. Further, more than one nozzle 34 is used to direct flow at each cord 24, for example, four nozzles 34 equally spaced around a circumference of the cord 24. Alternatively, as shown in FIG. 6, the nozzles 34 may be configured as ribbon nozzles 34, which direct airflow 36 over two or more cords 24, or all of the cords 24 of the belt 16. As with the embodiment of FIG. 5, several ribbon nozzles 34 may be utilized to direct the airflow 36 at the cords 24.

In some embodiments, the airflow 36 is heated prior to entering former 32 to condition the cords 24 and promote better adhesion of the jacket 16 to the cords 24. The selected temperature depends on the material forming the cords 24 and jacket 26. For example, in some embodiments the airflow 36 is heated to between 200 - 500 degrees Celsius to increase a cord temperature to between about 100 - 200 degrees Celsius prior to the application of jacket 26 to the cords 24.

## Claims

1. A method of preparing one or more cords for a forming process of a belt (16) for suspending and/or driving an elevator car (12), comprising:
arranging a plurality of wires (28) into a one or more cords (24);
directing the one or more cords (24) in a cord travel direction toward a jacket former (32);
directing a 3-10 bar airflow (36) at the one or more cords (24) of the belt (16) to remove volatile contaminants from the one or more cords (24) in a direction away from the jacket former (32);
**characterized in that** the method further comprises utilizing a vacuum system (40) located between the airflow (36) and the jacket former (32) to remove contaminants dislodged by the airflow (36).

2. The method of Claim 1, wherein the 3-10 bar airflow (36) is directed at the one or more cords (24) via one or more nozzles (34).

3. The method of Claim 2, wherein the one or more nozzles (34) are one or more ribbon nozzles.

4. The method of Claim 1, further comprising:
heating the 3-10 bar airflow (36); and
directing the heated airflow (36) across the one or more cords (24) to improve adhesion of the jacket material to the one or more cords (24).

5. A device comprising:
(i) a jacket former (32) and
(ii) a cleaning apparatus for preparing one or more cords (24) for forming of a belt (16) for suspending and/or driving an elevator car (12), said cleaning apparatus comprising a plurality of nozzles (34) to direct a 3-10 bar airflow (36) at one or more cords (24) to remove volatile contaminants from the one or more of cords (24) **characterized in that** the cleaning apparatus further comprises a vacuum system (40), wherein the vacuum system (40) is disposed between the plurality of nozzles (34) and the jacket former (32) to remove contaminants dislodged by the airflow (36).

6. The device of Claim 5, wherein the plurality of nozzles (34) includes a ribbon nozzle directing the airflow (36) to two or more cords (24) of the one or more cords (24).

7. The device of Claim 5, wherein the plurality of nozzles (34) are arranged to direct the airflow (36) at an injection angle (38) relative to a travel direction of the one or more cords (24) of less than 90 degrees.

8. Use of a heated 3-10 bar airflow (36) in a device of Claim 5, wherein the plurality of nozzles (34) are arranged to direct the airflow (36) at the one or more cords (24).

9. The method of claim 1 or the device of claim 5 wherein the jacket former (32) is an extruder or mold wheel.

## Patentansprüche

1. Verfahren zum Vorbereiten von einer oder mehreren Schnüren für einen Bildungsprozess eines Riemens (16) zum Aufhängen und/oder Antreiben einer Aufzugkabine (12), das Folgendes umfasst:
Anordnen einer Vielzahl von Drähten (28) zu einer oder mehreren Schnüren (24);
Leiten der einen oder mehreren Schnüre (24) in eine Schnurbewegungsrichtung in Richtung einer Mantelbildungseinrichtung (32);
Leiten einer Luftströmung (36) von 3-10 bar auf die eine oder mehreren Schnüre (24) des Riemens (16), um flüchtige Verunreinigungen von der einen oder den mehreren Schnüren (24) in einer Richtung weg von der Mantelbildungseinrichtung (32) zu entfernen;
**dadurch gekennzeichnet, dass** das Verfahren ferner ein Nutzen eines Vakuumsystems (40), das sich zwischen der Luftströmung (36) und der Mantelbildungseinrichtung (32) befindet, umfasst, um Verunreinigungen zu entfernen, die durch die Luftströmung (36) gelöst wurden.

2. Verfahren nach Anspruch 1, wobei die Luftströmung (36) von 3-10 bar über eine oder mehrere Düsen (34) auf die eine oder mehreren Schnüre (24) geleitet wird.

3. Verfahren nach Anspruch 2, wobei es sich bei der einen oder den mehreren Düsen (34) um eine oder mehrere Banddüsen handelt.

4. Verfahren nach Anspruch 1, ferner Folgendes umfassend:
Erwärmen der Luftströmung (36) von 3-10 bar; und
Leiten der erwärmten Luftströmung (36) über die eine oder mehreren Schnüre (24), um eine Haftung des Mantelmaterials an der einen oder den mehreren Schnüren (24) zu verbessern.

5. Einrichtung, die Folgendes umfasst:
(i) eine Mantelbildungseinrichtung (32) und
(ii) eine Reinigungsvorrichtung zum Vorbereiten von einer oder mehreren Schnüren (24) zum Bilden eines Riemens (16) zum Aufhängen und/oder Antreiben einer Aufzugkabine (12), wobei die Reinigungsvorrichtung eine Vielzahl von Düsen (34) umfasst, um eine Luftströmung (36) von 3-10 bar auf eine oder mehrere Schnüre (24) zu leiten, um flüchtige Verunreinigungen von der einen oder den mehreren Schnüren (24) zu entfernen, **dadurch gekennzeichnet, dass** die Reinigungsvorrichtung ferner ein Vakuumsystem (40) umfasst, wobei das Vakuumsystem (40) zwischen der Vielzahl von Düsen (34) und der Mantelbildungseinrichtung (32) vorgesehen ist, um Verunreinigungen zu entfernen, die durch die Luftströmung (36) gelöst wurden.

6. Einrichtung nach Anspruch 5, wobei die Vielzahl von Düsen (34) eine Banddüse beinhaltet, die die Luftströmung (36) auf zwei oder mehr Schnüre (24) der einen oder mehreren Schnüre (24) leitet.

7. Einrichtung nach Anspruch 5, wobei die Vielzahl von Düsen (34) dazu angeordnet sind, die Luftströmung (36) in einem Injektionswinkel (38) relativ zu einer Bewegungsrichtung der einen oder mehreren Schnüre (24) von weniger als 90 Grad zu leiten.

8. Verwendung einer erwärmten Luftströmung (36) von 3-10 bar in einer Einrichtung nach Anspruch 5, wobei die Vielzahl von Düsen (34) dazu angeordnet sind, die Luftströmung (36) auf die eine oder mehreren Schnüre (24) zu leiten.

9. Verfahren nach Anspruch 1 oder Einrichtung nach Anspruch 5, wobei die Mantelbildungseinrichtung (32) eine Schneckenpresse oder eine Formscheibe ist.

## Revendications

1. Procédé de préparation d'un ou plusieurs câbles pour un processus de formation d'une courroie (16) permettant de suspendre et/ou d'entraîner une cabine d'ascenseur (12), comprenant :
l'agencement d'une pluralité de fils (28) dans un ou plusieurs câbles (24) ;
la direction des un ou plusieurs câbles (24) dans un sens de déplacement de câble vers un dispositif de mise en forme de gaine (32) ;
la direction d'un écoulement d'air de 3 à 10 bar (36) vers les un ou plusieurs câbles (24) de la courroie (16) afin d'éliminer les contaminants volatils des un ou plusieurs câbles (24) dans une direction éloignée du dispositif de mise en forme de gaine (32) ;
**caractérisé en ce que** le procédé comprend en outre l'utilisation d'un système de vide (40) situé entre l'écoulement d'air (36) et le dispositif de mise en forme de gaine (32) pour éliminer les contaminants délogés par l'écoulement d'air (36).

2. Procédé selon la revendication 1, dans lequel l'écoulement d'air de 3 à 10 bars (36) est dirigé vers les un ou plusieurs câbles (24) par le biais d'une ou plusieurs buses (34).

3. Procédé selon la revendication 2, dans lequel les une ou plusieurs buses (34) sont au moins une buse à ruban.

4. Procédé selon la revendication 1, comprenant en outre :
le chauffage de l'écoulement d'air de 3 à 10 bar (36) ; et
la direction de l'écoulement d'air chauffé (36) à travers les un ou plusieurs câbles (24) pour améliorer l'adhérence du matériau de la gaine sur les un ou plusieurs câbles (24).

5. Dispositif comprenant :
(i) un dispositif de mise en forme de gaine (32) et
(ii) un appareil de nettoyage pour préparer un ou plusieurs câbles (24) pour former une courroie (16) permettant de suspendre et/ou d'entraîner une cabine d'ascenseur (12), ledit appareil de nettoyage comprenant une pluralité de buses (34) pour diriger un écoulement d'air de 3 à 10 bar (36) vers un ou plusieurs câbles (24) pour éliminer les contaminants volatils des un ou plusieurs câbles (24) **caractérisé en ce que** l'appareil de nettoyage comprend en outre un système de vide (40), dans lequel le système de vide (40) est disposé entre la pluralité de buses (34) et le dispositif de mise en forme de gaine (32) pour éliminer les contaminants délogés par l'écoulement d'air (36).

6. Dispositif selon la revendication 5, dans lequel la pluralité de buses (34) comporte une buse à ruban dirigeant l'écoulement d'air (36) vers deux câbles ou plus (24) des un ou plusieurs câbles (24).

7. Dispositif selon la revendication 5, dans lequel la pluralité de buses (34) sont agencées pour diriger l'écoulement d'air (36) selon un angle d'injection (38) par rapport à un sens de déplacement des un ou plusieurs câbles (24) de moins de 90 degrés.

8. Utilisation d'un écoulement d'air chauffé de 3 à 10 bars (36) dans un dispositif selon la revendication 5, dans laquelle la pluralité de buses (34) sont agencées pour diriger l'écoulement d'air (36) vers les un ou plusieurs câbles (24).

9. Procédé selon la revendication 1 ou dispositif selon la revendication 5, dans lequel le dispositif de mise en forme de gaine (32) est une extrudeuse ou une roue de moule.
